**Europäisches Patentamt**

**European Patent Office**

**Office européen des brevets**

(19)

(11) Veröffentlichungsnummer: **0 233 207 B1**

# EUROPÄISCHE PATENTSCHRIFT

(12)

(45) Veröffentlichungstag der Patentschrift :
13.03.91 Patentblatt 91/11

(51) Int. Cl.⁵: **G11B 3/095, G11B 19/14**

(21) Anmeldenummer : 86904144.2

(22) Anmeldetag : 28.06.86

(86) Internationale Anmeldenummer :
PCT/EP86/00382

(87) Internationale Veröffentlichungsnummer :
WO 87/00672 29.01.87 Gazette 87/03

(54) ABSCHALTEINRICHTUNG FÜR PLATTENSPIELER.

Die Akte enthält technische Angaben, die nach dem Eingang der Anmeldung eingereicht wurden und die nicht in dieser Patentschrift enthalten sind.

(30) Priorität : 24.07.85 DE 3526422

(43) Veröffentlichungstag der Anmeldung :
26.08.87 Patentblatt 87/35

(45) Bekanntmachung des Hinweises auf die Patenterteilung :
13.03.91 Patentblatt 91/11

(84) Benannte Vertragsstaaten :
AT BE CH DE FR GB IT LI LU NL

(56) Entgegenhaltungen :
CH-A- 560 443
DE-B- 1 270 300
GB-A- 2 000 895
US-A- 3 599 984
Patents Abstracts of Japan, Band 3, Nr. 146 (E-156), 4 Dezember 1979, & JP A 54125004
J. Markus Source book of Electronics Circuits 1968, S. 813
Weber Electronic Circuits Note Book 1982, S. 331

(73) Patentinhaber : Deutsche Thomson-Brandt GmbH
Hermann-Schwer-Strasse 3 Postfach 1307
W-7730 Villingen-Schwenningen (DE)

(72) Erfinder : HELD, Helmut
Hornbergerstrasse 9
W-7730 Villingen-Schwenningen (DE)

EP 0 233 207 B1

Jouve, 18, rue Saint-Denis, 75001 PARIS

**Beschreibung**

Die Erfindung betrifft eine Abschalteinrichtung gemäß dem Oberbegriff des Hauptanspruchs.

Eine diesem Oberbegriff weitgehend entsprechende Abschalteinrichtung ist aus der DE-PS 12 43 412 zu ersehen, die mit einer mit dem Tonarm verbundenen, bei Schwenkung des Tonarms eine Lichtschranke durchlaufenden Blende versehen ist. Es gehörte hier bereits zum Stand der Technik die Blende mit einer Lochreihe auszustatten, so daß in der Auslaufrille in der Zeiteinheit wegen der größeren Schwenkgeschwindigkeit eine größere Anzahl von Impulsen detektiert wird. Diese Lösung arbeitete nicht befriedigend, die Herstellungskosten waren zu hoch, ebenso die Genauigkeitsanforderung. Deshalb wurde gemäß der genannten Patentschrift eine Anzahl von unterschiedlichen Zeitgliedern für verschiedene Umdrehungszahlen des Laufwerks umschaltbar angeschlossen und so erreicht, daß die Abschaltung des Antriebs bei vorgegebener Schwenkungsgeschwindigkeit des Tonarms mittels eines transistorgesteuerten Schaltrelais durch an diesen RC-Gliedern auftretende Spannung bewirkt wird, deren Größe von der Änderungsgeschwindigkeit des Lichtstromes in der Lichtschranke abhängig ist.

Eine vollständige, aber aufwendige Lösung des Abschaltproblems ist der GB-A-2000895 zu entnehmen, bei welcher eine Doppellichtschranke verwendet wird um eine motorische, geregelte Tonarmschwenkbewegung über den ganzen Bereich der Abtastung einer Schallplatte zu bieten. Es werden die Bereiche Einlauf, Nutzsignal und Auslauf bzw. Abschalten erfaßt, indem zwei phasenverschobene Sinuswellen verarbeitet werden. Es wird ein Vorund Rückwärtszähler verwendet und die Phasendifferenz der beiden erzeugten Signale werden zur Erzeugung von Schaltkriterien benutzt, die für die verschiedenen Funktionen entsprechend einer komplexen Aufgabenstellung erforderlich sind. Mit diesem Aufwand läßt sich jeder Punkt einer Platte ansteuern. Das Problem des Plattenschlages (Exzentrizität) ist hier gelöst.

Eine ähnlich aufwendige Abschaltvorrichtung mit Doppellichtschranke wird in der CH-A 560 443 beschrieben, die allerdings nicht den Plattenschlag berücksichtigen kann bzw. eventuell vor Ende der Aufzeichnung abbricht.

Aus der JP-A-54 125 004 ist eine Lösung mit Einfachlichtschranke bekannt, die jedoch bei einem festen Durchmesser abschaltet und somit nur ohne Plattenexzentrizität funktioniert.

Aus der DE-A-12 70 300 ist eine Abschaltvorrichtung mit Einfachlichtschranke bekannt, die ein Strichmuster anwendet. Die Modulationsfrequenz erhöht sich, wenn der Abtaster in der Auslaufrille den Tonarm schneller schwenkt. Das wird zum Abschalten benutzt. In der Schaltung ist nur ein Hochpass angewendet, deshalb wird eine zu frühzeitige Abschaltung bei Plattenschlag eintreten. Statt eines Hochpasses müßte ein Tiefpass angewendet werden, um diesem Mangel abzuhelfen. Keine der erwähnten Lösungen konnte hinsichtlich notwendigem Aufwand und erzieltem Schaltverhalten befriedigen.

Die für Platten unterschiedlicher Drehzahlen (78,33 1/3 und 45) genormten Daten für die Rillensteigung in der Auslaufrille sowie die unterschiedlichen Werte für die Position des sogenannten Scharfbereichs, wie auch der letzten Kennrille und der letzten modulierten Rille sowie der Endrille mit den jeweiligen zugelassenen Toleranzen sowie schließlich die Forderung nach einer sehr preiswerten Realisierung der Abstellerfunktion ließen die Aufgabe entstehen, dafür eine aktuelle elektronische Lösung zu suchen.

Diese Aufgabe wird für den Gattungsbegriff des ersten Anspruchs erfindungsgemäß nach seinem Kennzeichen gelöst.

Weitere Einzelheiten und Ausgestaltungen sind den Unteransprüchen und der Beschreibung eines Ausführungsbeispiels zu entnehmen

Der sogenannte Scharfbereich ist definiert nach der Norm zwischen letzter Kennrille und letzter modulierter Rille, in der die Abschaltung des Antriebs und gegebenenfalls das Abheben und Rückführen des Tonarms stattfinden soll.

Der Strich-Code der Blende, ein Muster paralleler, sehr schmaler Hell-Dunkel-Felder gleicher Breite liefert bereits im Scharfbereich durch die Abtastung mittels Lichtschranke einen sinusähnlichen Spannungsverlauf am Detektor-Ausgang, dem höherfrequente Einflüsse aus Nutzmodulation und Exzentrizität überlagert sind. Um eine davon unabhängige Information zu erhalten, wird im ersten Glied der angeschlossenen Auswerteschaltung ein mit Schalthysteresis arbeitender Rechteckformer eingesetzt, dessen Ausgang an einander parallele Zweige einer High-Pegel- und Low-Pegel-Zeitauswertung angeschlossen ist. Rechteckformer (Schmitt-Trigger) mit wählbarer Schalthysteresis sind beispielsweise bekannt aus J. Markus Sourcebook of Electronic Circuits 1968, Seite 813, oberste Figur und S. Weber Electronic Circuits Note Book 1982, Seite 331 (Störaustastung nach c). Für diese beidenPegel wird in diesen parallelen Zweigen nunmehr zuerst eine High- bzw. Low-Schwellwert-Detektion zur Erfassung der Grenzen des vorliegenden Zeitfensters durchgeführt und nachfolgend ein Vergleich für die Dauer der jeweiligen akzeptierbaren High- bzw. Low-Pegel, die in einem Speicher abgelegt ist, vorgenommen. In nachfolgenden Stufen wird die aus den Vergleichern abgegebene Information, die Dauer eines Low- und eines High-Pegels, addiert und in einer nachfolgenden Stufe ein Vergleich mit eingespeicherten Sollzeiten durchgeführt. Das Ausgangssignal dieser Stufe liefert das gewünschte eindeutige und von Störeinflüssen unabhängige Kriterium für Stop-Ausführung in der abschließenden Stufe.

Vorteilhafterweise wird durch Verwendung einer Lichtschranke mit sehr hohem Auflösungsvermögen für die sehr schmalen Hell-Dunkel-Felder von 200 µm eine sehr gute Schaltempfindlichkeit mit großer Schaltsicherheit bei geringem Kostenaufwand erreicht, da ein ohnehin vorhandener µP mitbenutzt wird.

Ein Ausführungsbeispiel der Erfindung wird nachfolgend anhand der Zeichnung beschrieben. Diese zeigt in

Figur 1 in perspektivischer, vereinfachter Darstellung Tonarm, Schwenksektor und Blende sowie Lichtschranke ;
Figur 2 eine Auswerteschaltung als Blockschaltbild ;
Figur 3 zwei Diagramme zur Veranschaulichung der Arbeitsweise der Auswerteschaltung nach Figur 2.

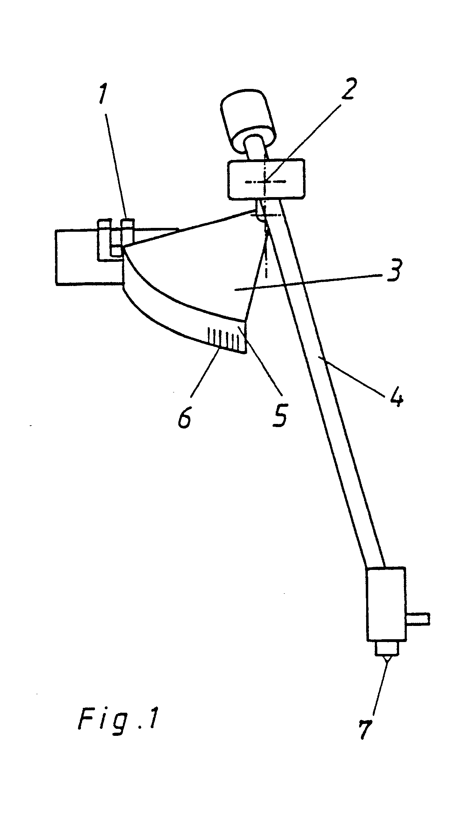

Figur 1 läßt die Lichtschranke 1 erkennen, in die eine Blende 5 taucht, wenn der Tonarm 4 geschwenkt wird. Diese Blende 5 ist an einem Sektor 3 befestigt und schwenkt mit dem Tonarm 4 um eine vertikale Achse 2. Wenn der Abtaster 7 gegen Ende der Abtastung einer Plattenseite sich dem Scharfbereich nähert, gelangt ein Hell-Dunkel-Muster 6 der Blende 5 in die Lichtschranke 1.

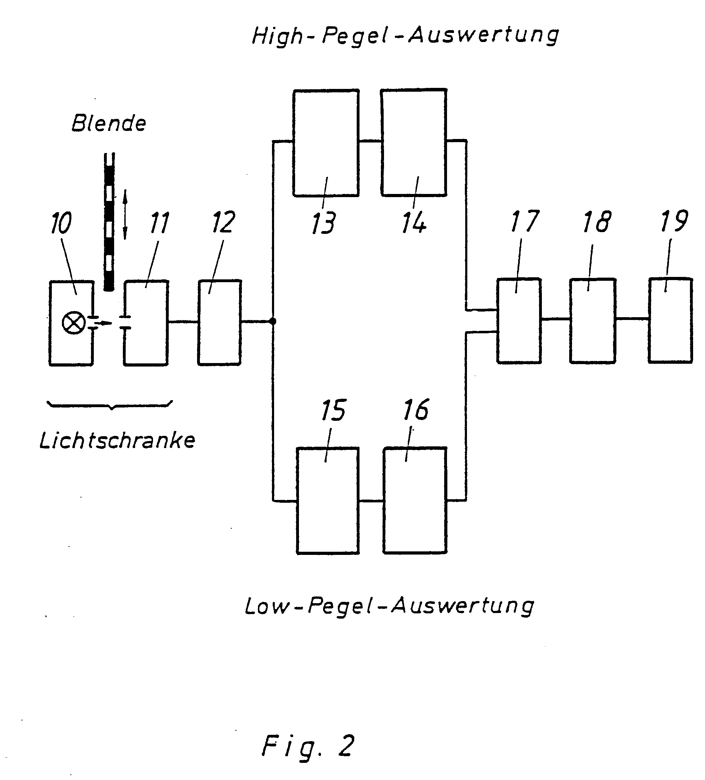

In Figur 2 ist die Blende sowie die Lichtschranke mit ihrer Lichtquelle 10 und dem Detektor 11 eingezeichnet. An den Ausgang des letzteren ist ein Rechteckformer 12 mit Hysteresis angeschlossen, der eine Rechteck-Impuls-Spannung an zwei parallele Serienschaltungen für die High-Pegel-Schwellwert-Detektion 13 und Vergleicher 14 mit Speicher für akzeptierbare High-Pegel sowie entsprechende Stufen 15 und 16 für die zeitliche Low-Pegel-Auswertung abgibt. Die Ausgänge dieser beiden Zweige gelangen zu einer Additionsstufe 17 für High- und Low-Pegel. In einer anschließenden Vergleicherstufe 18 wird mit eingespeicherten minimalen bzw. maximalen Sollwerten, das ist ein Zeitfenster, verglichen und je nach Ausgangssignal in der folgenden letzten Stufe 19 die Stop-Ausführung ausgelöst.

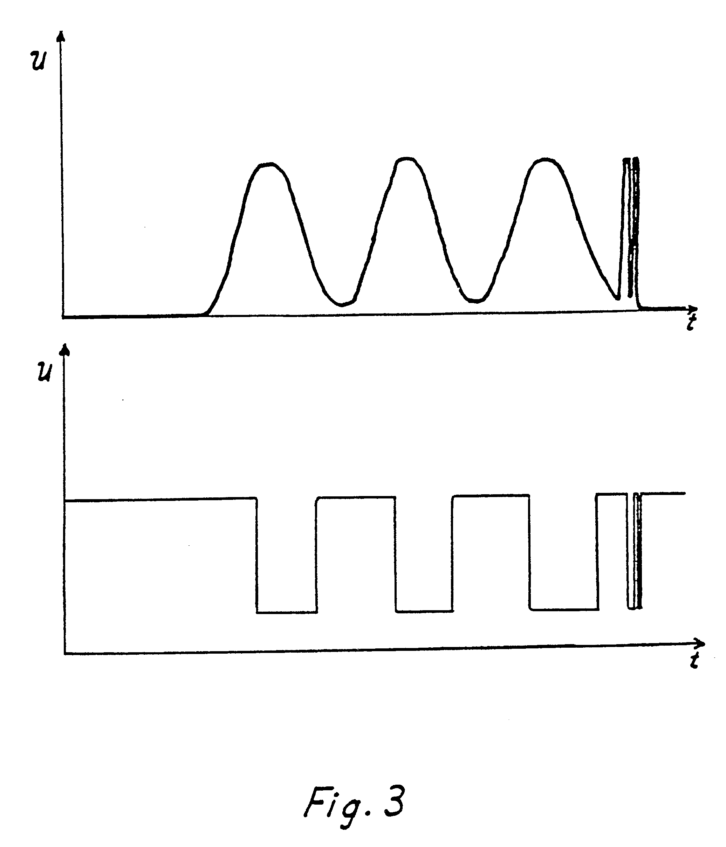

Zur näheren Veranschaulichung des Funktionsablaufs ist in Figur 3, oberen Diagramm, eine sinusähnliche Kurve zu erkennen. Ganz so ideal, d.h. ohne überlagerungen, würde die Ausgangsspannung am Dektektor 11 aussehen, wenn keine Einflüsse von Modulationen, wie Nutzton und Exzentrizität vorliegen. Anschließend an den sinusähnlichen Verlauf, der bei normalem Rillenabstand entsteht, folgen kurzfristige, d.h. schnelle Amplituden während des Durchlaufs der End- oder Auslaufrille, wobei, wie zu sehen ist, in der Zeiteinheit mehrere Hell-Dunkel-Wechsel der Blende zur Wirkung kommen. Erst durch die genormten Steigungsverhältnisse hier wird das Schaltkriterium für Abstellen erfüllt.

Bei der sogenannten Minimal-Auslaufrille werden von der Lichtschranke 1 (in Figur 1) 1,5 Vollinformationen durchlaufen, von welchen die nachfolgende Logik 1,0 Vollinformationen für ein Abstellen auswertet. Eine Vollinformation entspricht einem Hell-Dunkel-Feld oder einem Schlitz und einem Balken.

Das untere Diagramm der Figur 3 zeigt den Spannungsverlauf am Ausgang der Stufe 12, dem Rechteckformer. Hierbei ist eine bestimmte Schalthysteresis zu erkennen, die gewünscht ist um Störfrequenzen als überlagungen unwirksam zu machen.

## Ansprüche

1. Abschalteinrichtung für das Laufwerk eines Plattenspielers mit einer mit dem Tonarm verbundenen Blende, die ein Hell-Dunkel-Muster aufweist und eine Lichtschranke durchläuft und einer dem Detektor der Lichtschranke nachgeschalteten Auswerteschaltung, wobei die Blende ein Streifenmuster ist, das an einem um die Tonarmachse gemeinsam mit dem Tonarm schwenkbaren Sektor angebracht ist, und wobei der Detektor ankommende Lichtsignale in eine Folge elektrischer Impulse verwandelt, deren Zeitabstände mit einer Sollzeit verglichen werden und ein Stop-Signal dann erzeugen, wenn eine bestimmte Tonarmschwenkgeschwindigkeit ermittelt wird, **dadurch gekennzeichnet** daß das Streifenmuster (6) der Blende (5), beginnend im Bereich seines dem Schluß der Plattenrillenaufzeichnung entsprechenden Ende, eine regelmäßige Reihe von parallelen lichtdurchlässigen Schlitzen senkrecht zur Schwenkrichtung des Tonarms (4) aufweist, und daß die Auswerteschaltung in Signalrichtung eine Baugruppen anordnung und einen Funktionsablauf, wie folgt, aufweist :

A. Ein Detektor (11), der die ankommenden Lichtsignale in eine Folge elektrischer Impulse verwandelt ;
B. Ein Rechteckformer (12) mit Schalthysterese zwischen High- und Low-Impuls-Pegeln ;
C. Zwei parallele Auswertungszweige für die Dauer des High-Pegels und die Dauer des Low-Pegels, wobei in einem ersten Vergleicher (13) die Dauer des High-Pegels mit einem ersten vorgegebenen, zeitlichen Schwellwert verglichen wird und in einem zweiten Vergleicher (15) die Dauer des Low-Pegels mit einem zweiten, vorgegebenen, zeitlichen Schwellwert verglichen wird;
D. Wenn die vorgegebenen zeitlichen Schwellwerte (max. bzw. min.) überschritten werden, dann werden die Dauer des High-Pegels und die Dauer des Low-Pegels in je einem Speicher (14 bzw. 16) gespeichert und in einem anschießenden Addierer (17) addiert ;
E. In einem auf den Addierer (17) folgenden dritten Vergleicher (18) wird die im Addierer (17) ermittelte Zeitsumme mit Sollzeiten verglichenl ;

F. Wenn die im Addierer (17) ermittelte Zeitsumme akriptabel ist, gibt der dritte Vergleicher (18) ein Steuersignal an eine Steuerschaltung (19) ab, die zumindest das Abheben des Tonarms als STOP-Befehl bewirkt.

2. Abschalteinrichtung gemäß Anspruch 1, **dadurch gekennzeichnet**, daß die Steuereinrichtung (19) zusätzlich den Antriebsmotor des Plattentellers abschaltetund die Rükführung und Ablage des Tonarms (4) bewirkt.

3. Abschalteinrichtung gemäß Anspruch 1, **dadurch gekennzeichnet**, daß der Bereich der Schlitze (6) auf der Blende (5) derart angeordnet ist, daß sein Anfang am Beginn des sogenannten Absteller-Scharfbereichs liegt, wobei dieser Scharfbereich der genormte Bereich zwischen letzter Kennrille und letzter modulierter Rille ist und somit vor dem Beginn der Schalt- und Auslaufrille vorgesehen ist.

## Claims

1. A switch off device for the drive assembly of a record player having a screen connected to the pickup arm, which has a light-dark-pattern and passes through a light barrier, and having an evaluation circuit connected after the detector of the light barrier, in which the screen is a striated pattern which is arranged on a sector which is pivotal together with the pick-up arm about the pick-up arm axis, and in which the detector transforms incoming light signals into a sequence of electrical pulses, the time spacings between which are compared with a desired time and produce a stop signal when a certain pick-up arm pivot speed is determined, **characterised in that** the striated pattern (6) of the screen (5), beginning in the region of its end corresponding to the termination of the recording in the record grooves, has a regular row of parallel light transmissive slits perpendicular to the pivot direction of the pick-up arm (4), and that the evaluation circuit in the signal direction has an arrangement of assemblies and an operating sequence as follows :

A. A detector (11), which transforms the incoming light signals into a sequence of electrical pulses;

B. A square-wave shaper (12) with switching hysteresis between high and low pulse levels ;

C. Two parallel evaluation branches for the duration of the high level and the duration of the low level, in which in a first comparator (13) the duration of the high level is compared with a first predetermined, time threshold value and in a second comparator (15) the duration of the low level is compared with a second predetermined time threshold value ;

D. When the predetermined tine threshold values (max. or min.) are exceeded then the duration of the high level and the duration of the low level are stored in a memory (14 or 16) in each case and added in a subsequently connected adder (17) ;

E. In a third comparator (18) which follows on from the adder (17) the time total which is determined in the adder (17) is compared with desired times

F. If the time total determined in the adder (17) is acceptable, then the third comparator (18) emits a control signal to a control circuit (19), which effects at least the lifting up of the pick-up arm as the STOP command.

2. A switch off device according to claim 1, **characterised in that** the control device (19) also switches off the drive motor of the turntable and effects the return movement and set down of the pick-up arm (4).

3. A switch off device according to claim 1, **characterised in that** the region of the slits (6) on the screen (5) is arranged such that its start is at the beginning of the so-called switching-off sharp region, in which this sharp region is the standard region between the last marker groove and the last modulated groove and thus is provided before the beginning of the switching groove and the run out groove.

## Revendications

1. Dispositif de coupure pour la platine d'un tourne-disques comprenant un obturateur comportant une zone claire-obscure, relié au bras de lecture et occultant un capteur photoélectrique, et un circuit d'évaluation, intercalé à la suite du détecteur du capteur photoélectrique, l'obturateur consistant en un réseau de traits fixé à un secteur pivotant autour de l'axe du bras de lecture ensemble avec ce dernier et le détecteur transformant les signaux lumineux reçus en une suite d'impulsions électriques dont les intervalles sont comparés à un temps de consigne, et élaborant un signal d'arrêt en cas de détection d'une certaine vitesse de pivotement du bras de lecture, caractérisé en ce que le réseau de traits (6) de l'obturateur (5) consiste en une série régulière de fentes transparentes parllèles, perpendiculaires à l'axe de pivotement du bras de lecture (4), en commençant dans la zone de son extrémité correspondant à la fin de l'enregistrement des sillons du disque, et en ce que le circuit d'évaluation présente dans le sens du signal une disposition d'éléments et une séquence de fonctionnement comme suit :

A. Un détecteur (11) qui transforme les signaux lumineux reçus en une suite d'impulsions électriques ;

B. Un circuit de mise en forme produisant des impulsions rectangulaires (12) avec une hystérésis à la commutation entre les niveaux haut et bas des impulsions ;

C. Deux branches d'évaluation parallèles pour la durée du niveau haut et la durée du niveau bas, la durée du niveau haut étant comparée dans un premier comparateur (14) à un premier seuil de temps prédéfini et la durée du niveau bas étant comparé dans un deuxième comparateur (16) à un deuxième seuil de temps prédéfini ;

D. Lorsque les seuils de temps prédéfinis (maxi. ou mini.) sont dépassés, la durée du niveau haut et la durée du niveau bas sont stockées chacune dans une mémoire (14 et 16) et additionnées dans un additionneur (17) disposé à la suite ;

E. Dans un troisième comparateur (18) qui suit l'additionneur (17), la somme des temps déterminée par l'additionneur (17) est comparée à des temps de consigne ;

F. Si la somme déterminée par l'additionneur (17) est acceptable, le troisième comparateur (18) envoie un signal de commande à un circuit de commande (19) qui provoque au moins le relèvement du bras de lecture en tant qu'ordre d'arrêt.

2. Dispositif de coupure selon la revendication 1, caractérisé en ce que le dispositif de commande (19) coupe en outre le moteur d'entraînement du plateau et provoque le retour et la mise au repos du bras de lecture (4).

3. Dispositif de coupure selon la revendication 1, caractérisé en ce que la zone des fentes (6) sur l'obturateur (5) est disposée de telle façon que son commencement se trouve au début de la zone dite de déclenchement de coupure, cette zone de déclenchement étant la zone normalisée située entre le dernier sillon d'identification et le dernier sillon modulé et se trouve donc avant le début du sillon de commutation et de sortie.

Fig .1

High-Pegel-Auswertung

Blende

Lichtschranke

Low-Pegel-Auswertung

Fig. 2

Fig. 3

8